# EUROPEAN PATENT SPECIFICATION

(11) **EP 1 818 594 B1**
(45) Date of publication and mention of the grant of the patent: **23.06.2010**
(21) Application number: 07250535.7
(22) Date of filing: 09.02.2007
(51) Int. Cl.: F16L 55/179, B29C 63/34

(54) **Repair, renovation or renewal of conduits or pipelines**
Reparatur, Renovierung oder Erneuerung von Leitungen oder Pipelines
Réparation, rénovation ou renouvellement de conduits ou pipelines

(30) Priority: 10.02.2006 GB 0602659
(43) Date of publication of application: 15.08.2007
(73) Proprietor: Per Aarsleff A/S, 8361 Hasselager (DK)
(72) Inventor: Lystbaek, Peter, 8361 Hasselager (DK)
(74) Representative: Wood, Graham

(56) References cited:
- EP-A- 0 550 860
- EP-A2- 0 911 568
- JP-A- 2 102 024
- US-A- 5 224 742
- US-B1- 6 619 886
- DATABASE WPI Week 198530 Derwent Publications Ltd., London, GB; AN 1985-180280 XP002429689 -& JP 60 107323 A (SAKAKURA Y) 12 June 1985 (1985-06-12)

## Description

The present invention relates to the repair, renovation or renewal of conduits and more specifically to the relining of such conduits in situ.

It is a well known that fluid-bearing conduits can rupture or else become blocked during use such that repair of the conduit is required. The condition of the interior surface of the conduit may be of particular importance for a number of applications, such as for conduits to be used for sanitary purposes or else for the transportation of drinking water or gas.

Whilst in some instances it is cost effective to simply remove a conduit or else a part thereof and replace it with a new section of piping, problems arise when a conduit has been permanently installed or else when access to a conduit is restricted. Such problems have been well documented and a widely adopted solution is to reline the conduit by inverting a flexible lining tube inside the original conduit. In this manner, only a small opening, such as at one end of the conduit, is required in order to be able to renovate a long length of piping. One preferred method is to provide the lining tube with a layer of curable resin. The resin is maintained in a soft state during insertion of the liner and can then be cured once the liner is in place so as to form a rigid inner which both relines and strengthens the original conduit.

Such methods can prove to be more cost effective than replacing the original conduit especially when the conduit is embedded within a building or else buried underground. However such methods require a continuous liner to be inserted such that any branches or junctions within the original conduit will be sealed off.

In reopening the branches, a particular problem is experienced when attempting to line the branches since a discontinuity is formed between the main conduit lining and the branch lining. Such discontinuities degrade the quality of the lining and can lead to shear stress within the conduit. In the case of ducting used in conjunction with sanitary appliances, a discontinuity can lead to a build up of debris which serves to block the conduit.

Known solutions to this problem are often complicated, requiring access to the inside of the main conduit which is unfavourable since it vastly increases the time taken to rehabilitate the conduit and negates many of the benefits of the relining process. In many cases access via the main conduit is impractical due to the conduit diameter.

In US5224742 there is disclosed a branch lining system in which the branch conduit is provided with a liner which has a collar which extends into the main conduit. The collar is overlaid by a base which retains the collar in position and said base and collar are in turn overlaid by the liner of the main conduit. JP02102024 relates to a system for repairing a branch into a main conduit and the material used to achieve the liner for the same.

In view of the foregoing problems, the present invention aims to provide for the efficient relining of conduit branches such that discontinuities in the lining are avoided.

According to a first aspect of the present invention as defined in claim 1, there is provided apparatus for lining first and second interconnected conduits said first conduit in the form of a substantially vertical downpipe along which human effluent is carried and said second conduit connects a sanitary device to the first conduit, said second conduit opening into said first conduit along the length thereof, both of said conduits lined with respective first and second liners along the length thereof and **characterised in that** the liner for the second conduit includes, at at least the end which lies at the opening into the first conduit, a deformable collar portion with a diameter greater than the internal diameter of the second conduit such that when the collar is positioned in the first conduit it is contacted by the liner of the first conduit and held in contact with the inner wall of the first conduit around the periphery of the opening by being overlaid by the said liner of the first conduit such that an integral lined passage is created for the flow of effluent from the sanitary device **characterised in that** the liner comprises a substantially rigid tube connected to the deformable collar portion and the liner for the first conduit is pliable and includes a resin impregnated material which is cured once the collar portion is in the correct position in contact with the liner.

The deformable nature of the collar portion is advantageous in that it helps guide the liner along the conduit during insertion.

Typically when the liner reaches an open end of the conduit, the collar portion forms a circumferential rim around the end of the conduit. In one embodiment, the deformable collar portion extends outwardly of the liner body.

The conduit is preferably a second conduit depending from a first conduit such that the deformable collar portion forms a rim around the second conduit opening within the first conduit.

The present invention is particularly advantageous in that the collar deforms upon entry into the conduit such that a tight fit can be achieved between the liner and the conduit. Furthermore the rim formed by the deformable collar portion is pliable such that it can be pressed into the conduit end so as to form a seal therewith. In one embodiment the collar is a sleeve formed around the body portion. Typically the sleeve has an outwardly tapered end portion forming the deformable portion which takes the shape of a lip or brim. The deformable portion may be conical in shape. Preferably the sleeve and deformable portion are formed as a single deformable member which may be made of rubber or the like. In one embodiment the sleeve is made of polyurethane.

The outward taper of the brim is beneficial since it ensures that the brim extends beyond the circumference of the conduit opening when inserted. Thus the deformable portion can deform elastically upon insertion of the liner into the conduit and can then at least partially regain its original shape when positioned at an open end of the conduit. In this manner a snug fit between the liner and the conduit without detriment to the seal formed around the lined opening of a branch conduit into a main conduit.

Preferably the length of the body portion exceeds the length of the second conduit into which it is to be inserted. The provision of a rigid body portion is particularly advantageous since an installer may grip one end of the body portion and insert the other end with the deformable collar into the conduit so as to quickly achieve a tight-fitting lining without the need for additional tools or equipment.

The end of the tubing opposite the sleeve may be provided with formations to allow attachment of standard ducting thereto.

According to a preferred embodiment, the liner is provided with a sealing means which engages between the liner and the conduit. The sealing means may be spaced from the collar portion and may be annular in shape and arranged for attachment to the body portion. Alternatively the sealing means may comprise one or more ribs or splines. The ribs or splines may extend in a longitudinal direction along at least part of an outer surface of the liner and may be formed integrally with the liner or else may be provided by way of a separate annular member.

The sealing means may define a cavity between the liner and the conduit and, in one embodiment, the cavity can be filled with a sealant such as, for example, a resin. The sealing means may be provided with a frictional surface to engage with the body portion and/or the inner surface of the conduit.

The sealing means helps to ensure correct alignment of the liner such that the liner is held fast in a parallel orientation to the conduit to be lined.

Typically the liners for the first conduit includes a layer of resinous , curable material impregnated therealong, and, when said liners are in position, the resin is cured to harden and maintain the liners in position.

The apparatus typically also includes a pulling and/or pushing assembly to allow the liners to be moved into position along their respective conduits and means for curing or hardening the liners to retain the same in the lining positions.

In one embodiment the collar is deformable to allow the liner to pass along the conduit or pipeline. Typically the collar is provided as part of a sleeve located at said end of the liner body.

According to a further aspect of the present invention there is provided a method of lining first and second interconnected conduits using an apparatus as defined in any of claims 1-18, said first conduit being a downpipe and the second conduit connecting a sanitary device to the downpipe, said second conduit opening into the first conduit at a location intermediate the ends thereof, the method including the steps of inserting a liner into and along the second conduit such that a collar portion of the liner is deformed as it passes along the second conduit and resiliently expands when it protrudes from the opening of the second conduit into the first conduit to form a rim on the wall of the first conduit around the opening into the first conduit, inserting a liner along the first conduit **characterised in that** the liner of the first conduit contacts the liner of the first conduit and overlies the said collar portion and the opening into the second conduit, pressure is applied to press the first conduit liner and collar portion against the wall of the first conduit, at least the first conduit liner is hardened to retain the same in position with the collar portion and the portion of the first conduit liner overlying the second conduit opening is cut away to reveal the opening and form an integral lined passage for effluent from the sanitary device into the first conduit.

Preferably at least part of the deformable collar portion extends into the first conduit section. According to a preferred embodiment the lining is inserted into the second conduit to such an extent that the deformable collar portion protrudes from an open end of the second section into the first section. The collar may thus regain its original shape and the lining may be retracted slightly so that the collar forms a close fit with the second section opening.

Typically a first lining is inserted into the first section either prior to, or else after inserting the second lining. A pressure may be applied to the inside of the first lining such that the first lining is pressed against and adheres to the deformable collar portion. Typically the first lining is inflated with a fluid.

Preferably the first lining includes an outermost resin impregnated layer such that upon applying pressure to the inside of the first lining, the resinous layer comes in contact with the collar portion. Typically the resin-impregnated layer includes an absorbent material substantially saturated with liquid resin.

Preferably the resin is cured whilst the first lining is pressed against the deformable collar portion such that the first lining is adhered to the collar as the resin sets. In one embodiment the first lining is steam cured. Typically the first lining has an impervious inner layer such that once in place within the first conduit, the resin impregnated layer lies between the impervious layer and the inside wall of the conduit.

In this way, the join between the first conduit and the second conduit is formed and sealed simultaneously with the normal relining procedure. No separate steps are required to attach the lateral lining after the resin has cured and access from the inside of the first conduit is not required.

Once the resin has set fast, the second conduit may be reopened by simply boring or cutting through the section of the first liner which is covering the end of the conduit. The second lining may be provided with formations at its free end for subsequent attachment to standard piping so as to reconnect the second conduit for use. In one embodiment the second conduit is a branch conduit of the first, main, conduit.

Specific embodiments of the invention are described below in further detail with reference to the drawings, of which:
Figure 1 shows a longitudinal section through a conduit to be relined according to the present invention;
Figures 2a and b show a liner according to the present invention positioned within the conduit of figure 1;
Figures 3a-c show the installation of the liner according to the present invention;
Figure 4 shows preferred features of a liner according to the present invention;
Figure 5a and b shows a further embodiment of the invention showing a cross section of a conduit with a liner placed into position along the length thereof;
Figures 6a and b illustrate the preparation of a liner with body and collar in accordance with the invention;
Figures 7a and b illustrate the collar having been placed into position;
Figures 8a and b illustrate the formation of the liners in both conduits;
Figures 9a and b illustrate the curing of the liners; and
Figures 10a and b illustrate the reinstatement of the fluid flow connection between the first and second conduits.

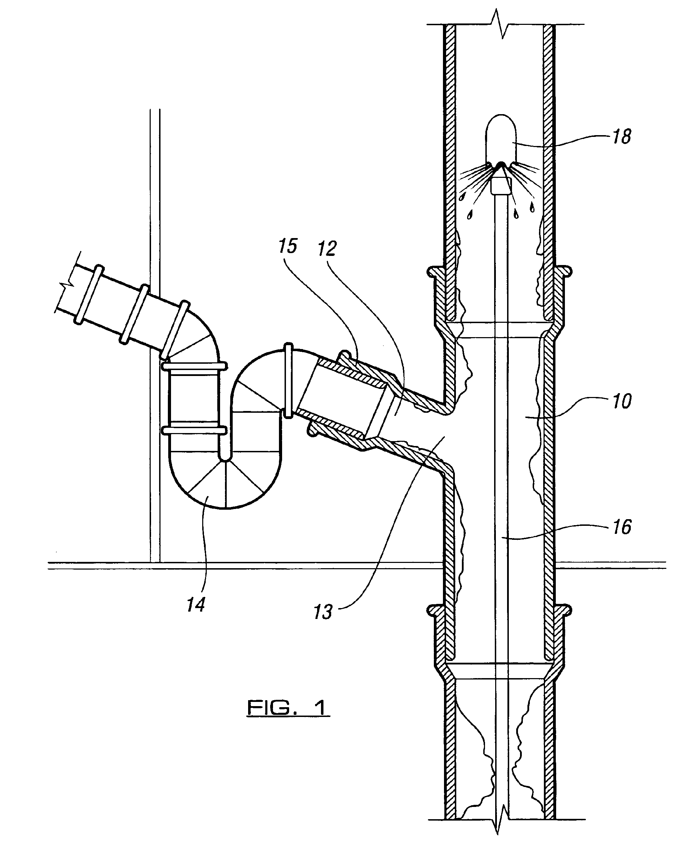

Turning firstly to figure 1, there is shown a conduit in the form of a vertical downpipe 10 which is used to convey effluent from a sanitary appliance (not shown). A second, branch, pipe 12 extends between the downpipe 10 and the sanitary device and is integrally formed with the downpipe so as to form an opening 13 into the downpipe.

A U-bend portion 14 is normally provided between the branch pipe 12 and the sanitary device as shown. The branch pipe is provided with a section of increased diameter 15, into which the U-bend is removably inserted so as to form a sealed conduit between the sanitary appliance and the downpipe 10.

It will be appreciated that the downpipe is made up of multiple sections such that a number of branch pipes enter the downpipe along its length.

Solid or semi-solid material becomes deposited on the inside of the downpipe 10 and branch pipes 12 during use and so the pipe is cleaned prior to being relined by high pressure water jets as shown in figure 1. Water or a chemical cleaning fluid is supplied under pressure via hose 16 to a head portion 18 which is moved along the pipe and directs the fluid onto the inside wall of the pipe.

At this point the inside of the downpipe 10 may be inspected using closed circuit television CCTV to ensure that the pipe is ready to be relined.

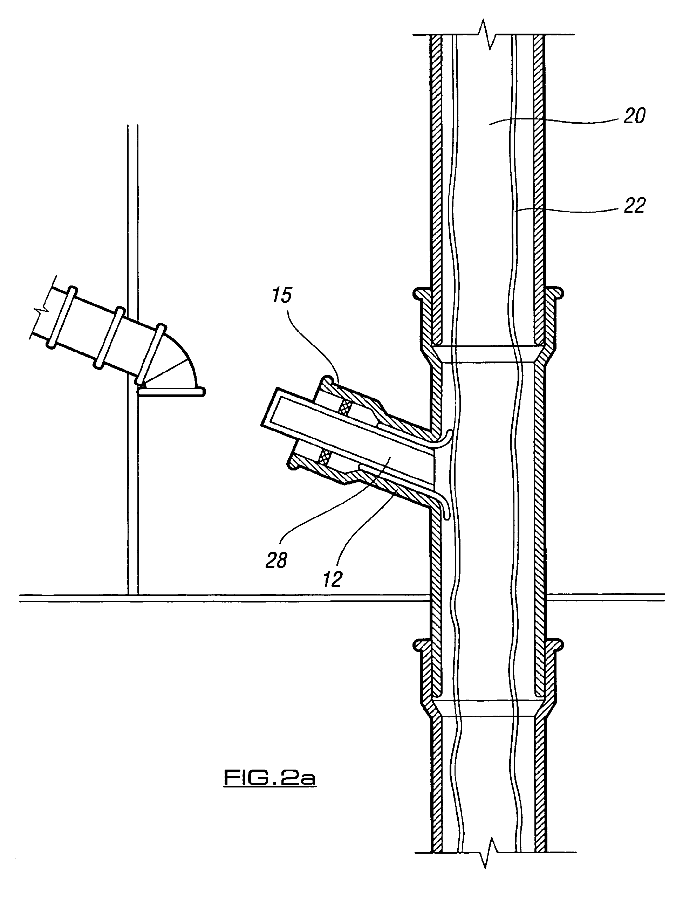

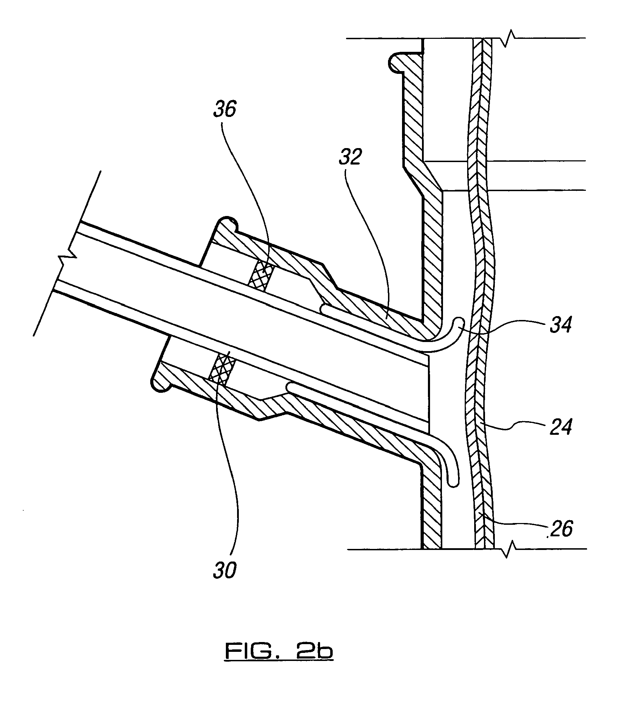

Turning now to figure 2a, the relining process involves inserting a first liner 20 into the downpipe 10. The first liner 20 is pliable upon insertion and is generally tubular in shape, having a liner wall 22. The wall 22 can be seen in further detail in figure 2b and is made up of an impermeable innermost layer 24 surrounded by a layer of resin-impregnated material 26, which normally comprises felt. This type of liner is referred to as a cured-in-place pipe (CIPP) liner. It is generally preferred to prepare the liner 20 with the impermeable layer 24 on the outside such that liquid resin can be pumped into the liner so as to saturate an absorbent inner layer of felt 26. When the liner 20 is to be installed, an end of the liner is attached to the downpipe 10 and the liner is then inverted into the downpipe under pressure. Compressed air is used to force the liner 20 to invert into the downpipe in this manner.

Once the first liner 20 has been inverted into the downpipe 10, the pressure applied to the inside of the liner 20 is reduced in order to allow for installation of a liner 28, referred to as a transition profile. It will be appreciated that the transition profile may alternatively be inserted prior to insertion of the first liner without any substantial effect to the invention.

The transition profile 28 comprises a rigid inner tube 30 provided with a collar 32. The collar 32 is fixed to the inner tube 30 and has a flexible extension portion or brim 34.

The installation of the transition profile is carried out by inserting the inner tube complete with collar 32 into the existing branch pipe 12. The flexibility of the brim allows it to be deformed upon entry into the branch pipe 12 such that the brim folds back upon itself as the inner tube 30 is pushed into the pipe 12. The transition profile is pressed sufficiently far into the branch pipe that the end of the inner tube 30 and the brim 34 extend into the downpipe 10. The transition profile is then retracted slightly such that the brim unfolds and is pulled tightly against the wall of the existing downpipe. In this manner the brim forms a circumferential rim around the branch pipe opening 13.

In the case that the transition profile is inserted so far into the downpipe that the brim fully opens out, the retraction step still ensures that a sealing rim is correctly formed.

A sealing member in the form of ring clamp 36 is provided around the inner tube 30 in the vicinity of the increased diameter section 15 of the branch pipe. The ring clamp 36 is wedged into position so as to maintain correct orientation of the transition profile before it is fixed in place.

Once the transition profile is correctly positioned, the pressure inside the first liner 20 is increased so that the wall 22 is pressed against the inside of the downpipe. The increased pressure causes outermost layer of resin-impregnated material to be wedged against the brim, pressing it against the inside wall of the downpipe. The absorbent material holding the resin thus deforms slightly around the brim, causing the liner and the brim to co apt and filling any voids with resin.

A filler material such as an epoxy resin may also be inserted into the cavity formed by the ring clamp 36 in-between the inner tube 30 and the branch pipe 12 so as to secure the lining in place.

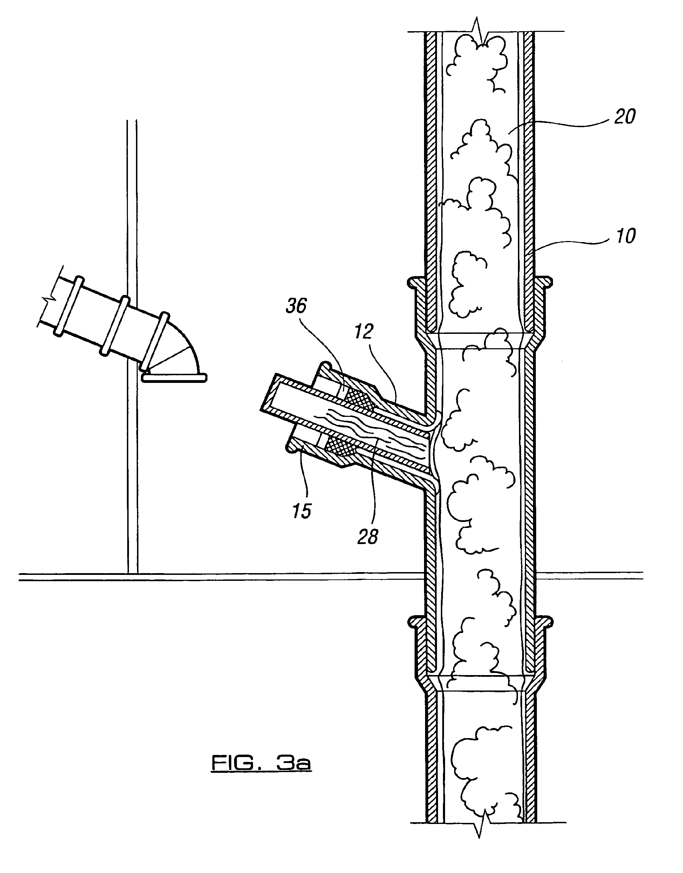

The resinous first liner 20 is now cured using conventional techniques by exposing the liner to heat and/or light. The preferred method as shown in figure 3a involves filling the liner with steam so as to achieve a relatively short cure time. Whilst curing, the excess resin from the lining 20 in the vicinity of the brim glues the brim to the liner and to the existing downpipe forming a sealed connection.

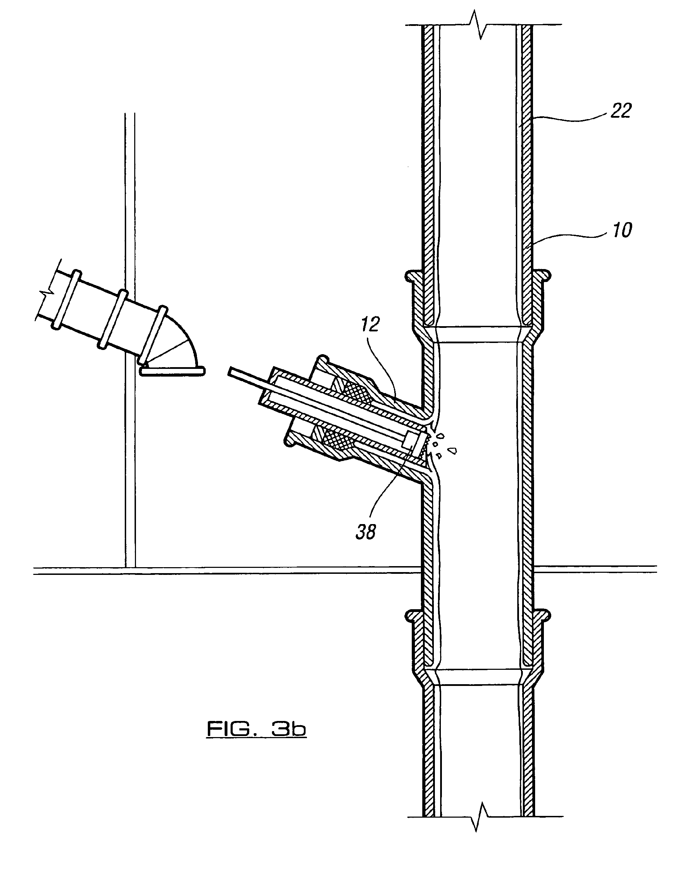

Once the resin has cured to form a solid lining, a cutting or boring tool 38 can be inserted into the open end of the transition profile as shown in figure 3b so as to remove the portion of the first liner 20 covering the mouth 13 of the branch pipe 12. The transition profile can now be reconnected to the standard sanitary appliance connection. For the U-tube 14 shown in figure 1, the open end can be reconnected by insertion into the gap between the inner tube 30 and the branch tube 12.

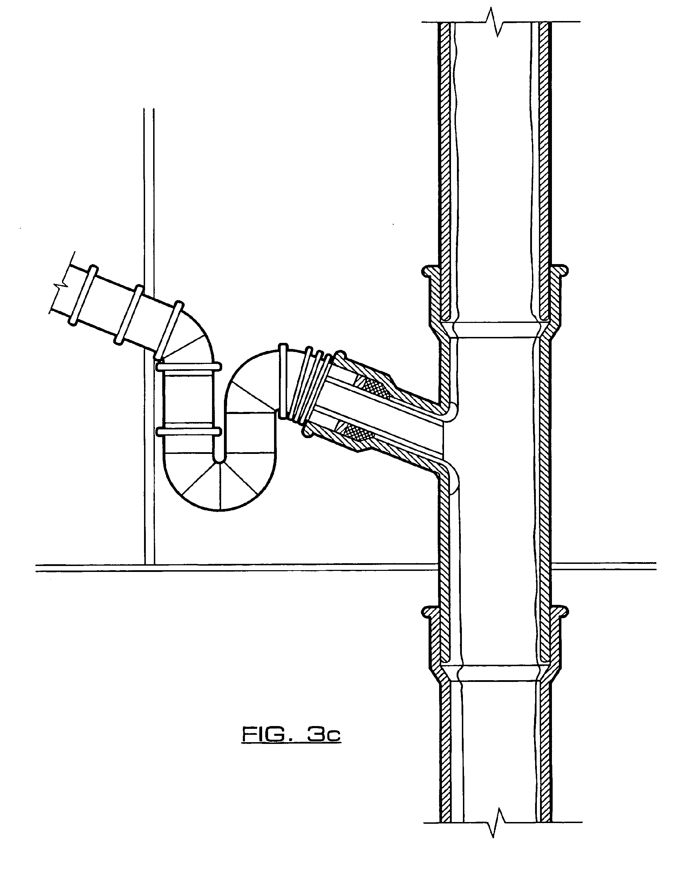

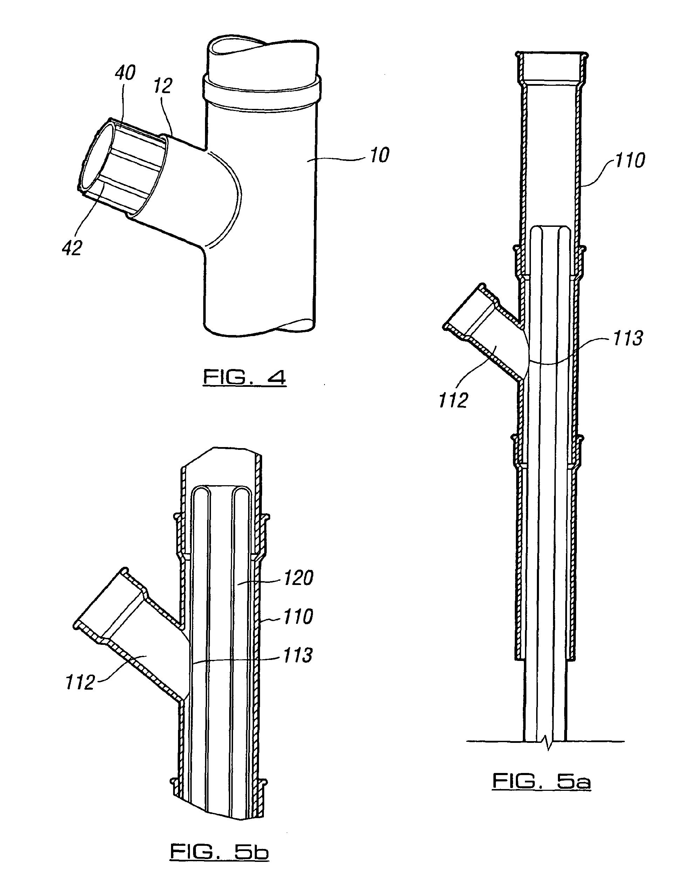

An alternative to the ring clamp arrangement 36 of figures 2 and 3 is shown in figure 4. In this embodiment, the lining tube 40 is provided with a series of fins or splines 42 around its circumference. These splines run at least part way along the length of the tube 40 and form a tight fit with the branch pipe 12. The splines may be deformable to a required degree so as to allow some tolerance between the diameter of the branch pipe 12 and the diameter of the lining 40. The splines may be formed on a separate annular sleeve which is located on the lining tube 40 or else may be integrally formed with the tube itself. After insertion, a filler material may be inserted in the voids formed between the tube 40 and the branch pipe 12.

The spline arrangement is in some ways preferred to the loose ring arrangement shown in figure 2 and 3 since the splines can be provided on the body of the lining tube, thus reducing the number of parts required to reline the branch pipe.

Turning now to Figure 5a-b there is shown a further embodiment of the invention. A conduit or pipeline in the form of a downpipe 110 is shown in connection with a branch, pipe 112 which joins the conduit 110 intermediate the length thereof at an opening 113.

In the cross section along the longitudinal axis of pipeline 110 the interior of the pipeline is shown. As part of the invention the interior is to be lined and a liner 120 is shown inverted in the pipeline 110. The first liner 20 is pliable upon insertion and is generally tubular in shape and can be of a similar form as described with regard to Figure 2.

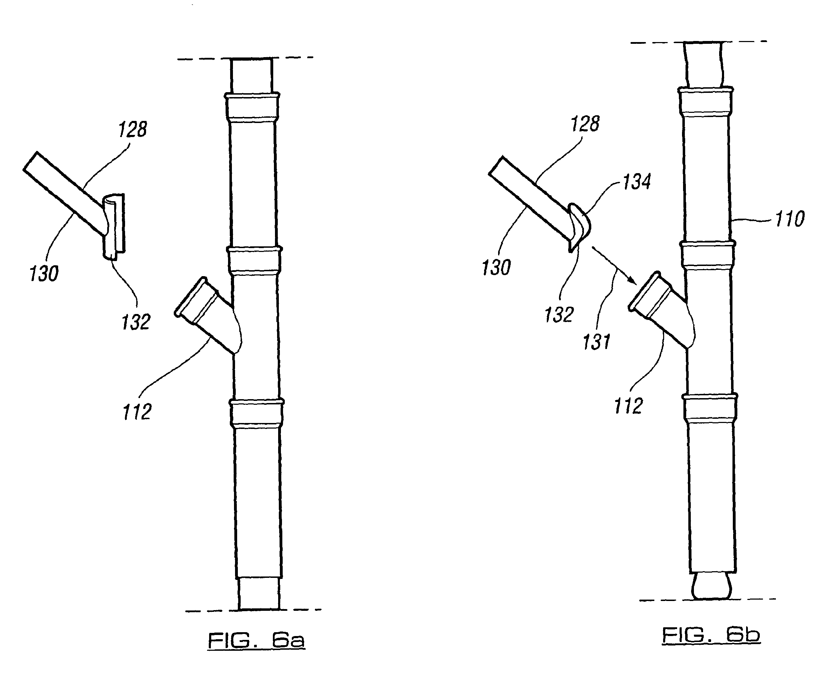

Figures 6a and b illustrate a liner 128 for the conduit 112 prior to insertion. The liner includes a body 130 and a collar 132. The collar 132 is fixed to the inner tube body 130 and has a flexible extension portion or brim 134. The Figure 6b shows the liner 128 having been cut to size in comparison to the collar of Figure 6a.

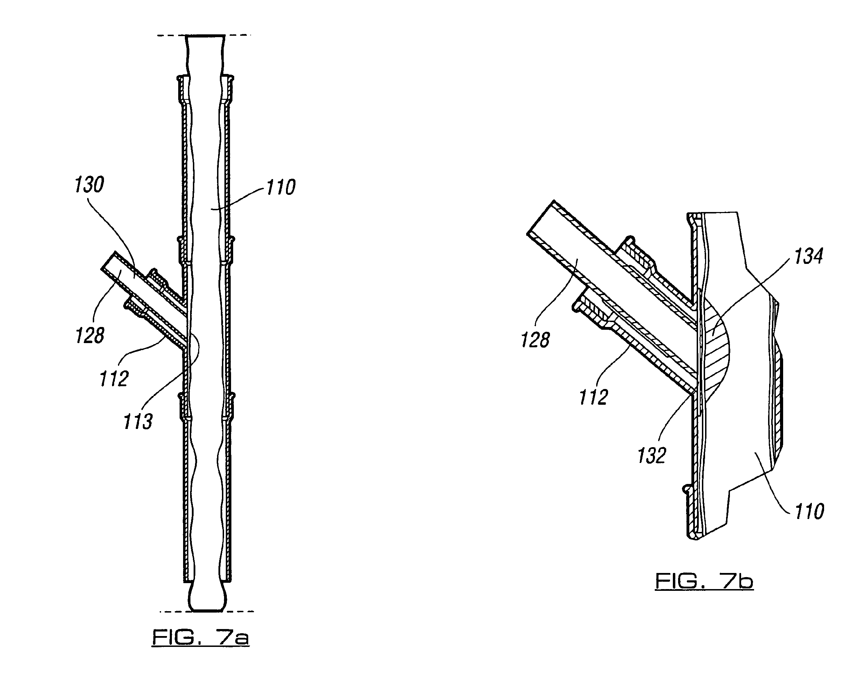

The installation of the liner 128 is carried out by inserting the same as illustrated by arrow 131 into the conduit or pipeline 112. The flexibility of the brim 134 allows it to be deformed upon entry into the conduit 112 such that the brim folds back upon itself as the inner tube body 130 is pushed in. The liner 128 is pressed sufficiently far into the branch pipe that the collar 132 and brim 134 extend into the downpipe 110. The liner is then retracted slightly such that the brim unfolds and is pulled tightly against the wall of the existing downpipe. In this manner the brim forms a circumferential rim around the branch pipe opening 113 as shown in Figures 7a and b.

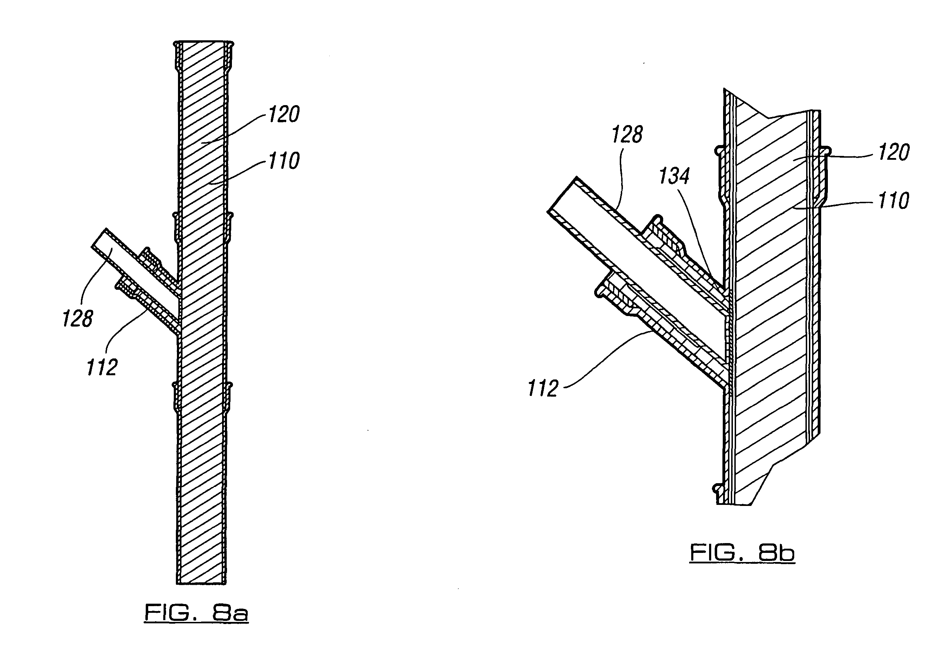

During this time the pressure in the liner is reduced so as to allow the liner 128 to be inserted and the collar 132 positioned correctly. Once the liner 128 is correctly positioned, the pressure inside the first liner 120 is increased so that the same is pressed against the inside of the downpipe. The increased pressure causes the liner 120 to be wedged against the brim, pressing it against the inside wall of the downpipe as shown in Figures 8a and b. A filler material such as an epoxy resin may also be inserted into the gap formed between the collar 132 and the existing interface of the conduits so as to secure the lining in place.

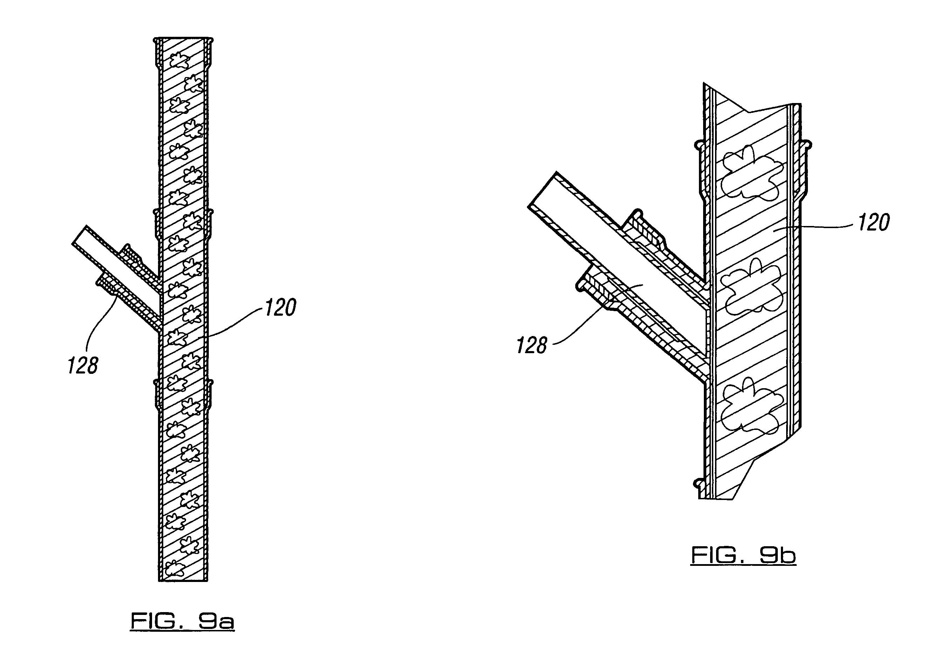

Figures 9a and b show how the liners 120 and 128 and the resin can be cured by introducing steam in to the liners.

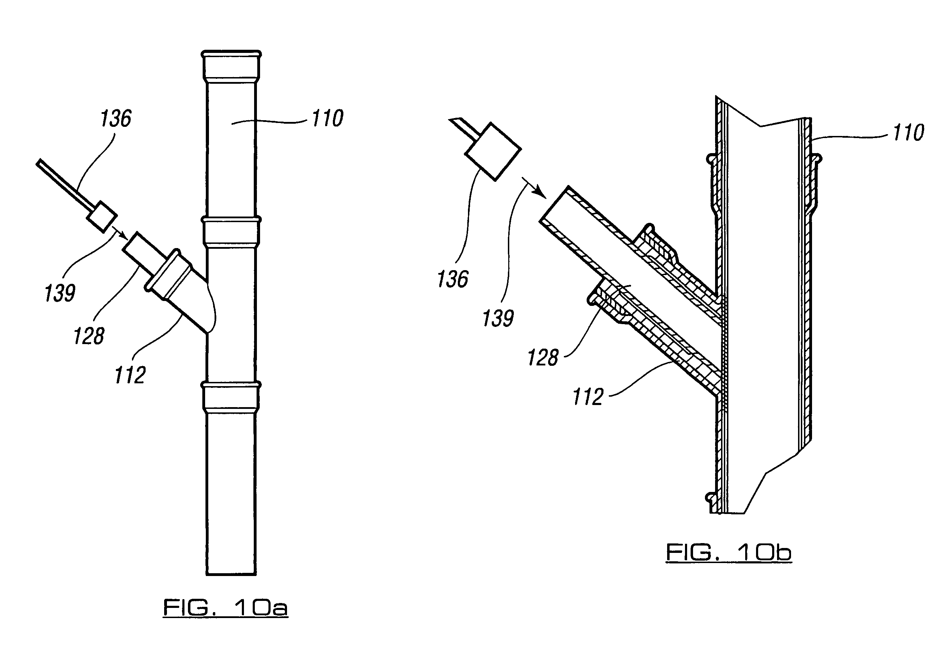

At this stage the opening 113 is sealed by liner 120 and so once the resin has cured to form a solid lining, a cutting or boring tool 136 can be inserted into the open end of the liner 128 profile as shown in figure 10a and b by arrow 139 so as to remove the portion of the first liner 120 covering the opening 113 of the branch pipe 112.

The present invention may be applied to a wide range of conduit and pipelines and of various sizes. Thus reference to conduits or pipelines hereonin should not be taken to limit the use to one or the other form of the same. Tests have shown that the invention is particularly suited to conduits or pipelines with a diameter in the region of 20-300mm.

## Claims

1. Apparatus for lining first and second interconnected conduits said first conduit in the form of a substantially vertical downpipe (10,110) along which human effluent is carried and said second conduit (12, 112) connects a sanitary device to the first conduit, said second conduit opening into said first conduit along the length thereof, both of said conduits lined with respective first and second liners (20,28;120,128) along the length thereof, the liner for the second conduit includes, at at least the end which lies at the opening into the first conduit, a deformable collar portion (32;132) with a diameter greater than the internal diameter of the second conduit such that when the collar is positioned in the first conduit it is contacted by the liner (20;120) of the first conduit and held in contact with the inner wall of the first conduit (10,110) around the periphery of the opening (13;113) by being overlaid by the said liner (20;120) of the first conduit such that an integral lined passage is created for the flow of effluent from the sanitary device **characterised in that** the liner ( 28,128) for the second conduit comprises a substantially rigid tube (30,130) connected to the deformable collar portion (32,132) and the liner (20,120) for the first conduit is pliable and includes a resin impregnated material which is cured once the collar portion is in the correct position in contact with the liner (20,120).

2. Apparatus according to claim 1 wherein the liner of the second conduit is introduced through the second conduit towards the first conduit and when the collar reaches the opening it extends to form a circumferential rim around the end of the conduit.

3. Apparatus according to claim 2 wherein the deformable collar portion is resiliently provided to extend outwardly.

4. Apparatus according to claim 3 wherein the collar reforms upon entry into the first conduit such that a tight fit can be achieved between the liner and the conduit wall.

5. Apparatus according to claim 1 wherein the collar portion forms a pliable rim so that it can be pressed onto the said conduit end so as to form a seal therewith.

6. Apparatus according to claim 1 wherein the collar is a sleeve formed around the liner body.

7. Apparatus according to claim 6 wherein the sleeve has an outwardly tapered end portion forming the collar portion which takes the shape of a rim.

8. Apparatus according to claim 7 wherein the collar portion is conical in shape.

9. Apparatus according to claim 1 wherein the liner for the second conduit includes the collar and a sleeve formed integrally.

10. Apparatus according to claim 1 wherein the liner for the second conduit includes a sleeve made of polyurethane.

11. Apparatus according to claim 1 wherein the liner for the second conduit is in the form of a tube with the collar depending radially from one end thereof.

12. Apparatus according to claim 1 wherein the length of the liner exceeds the length of the second conduit into which it is inserted.

13. Apparatus according to claim 1 wherein the liner for the second conduit is provided with a sealing means to allow engagement between the liner and the conduit.

14. Apparatus according to claim 13 wherein the sealing means is spaced from the collar portion and is angular in shape and arranged for attachment to the liner body.

15. Apparatus according to claim 14 wherein the sealing means comprises one or more ribs or splines which extend in a longitudinal direction along at least part of an outer surface of the liner.

16. Apparatus according to claim 1 wherein the sealing means define a cavity between the liner and the conduit.

17. Apparatus according to claim 1 wherein the liners for the first and/or second conduits include a layer of resinous , curable material impregnated therealong, and, when said liners are in position, the resin is cured to harden and maintain the liners in position.

18. Apparatus according to claim 17 wherein a pulling and/or pushing assembly is provided to allow the liners to be moved into position along their respective conduits.

19. A method of lining first and second interconnected conduits (10, 12;110,112) using an apparatus as defined in any of claims 1-18, said first conduit being a downpipe and the second conduit connecting a sanitary device to the downpipe, said second conduit opening into the first conduit at a location intermediate the ends thereof, the method including the steps of inserting a liner (28;128) into and along the second conduit such that a collar portion (32;132) of the liner is deformed as it passes along the second conduit (12;112) and resiliently expands when it protrudes from the opening of the second conduit into the first conduit (10; 110) to form a rim on the wall of the first conduit around the opening (13;113) into the first conduit, inserting a liner (20;120) along the first conduit wherein the liner (20;120) of the first conduit contacts the liner (20;120) of the first conduit and overlies the said collar portion (32;132) and the opening into the second conduit, pressure is applied to press the first conduit liner and collar portion against the wall of the first conduit, at least the first conduit liner is hardened to retain the same in position with the collar portion and the portion of the first conduit liner overlying the second conduit opening is cut away to reveal the opening and form an integral lined passage for effluent from the sanitary device into the first conduit.

20. A method according to claim 19 wherein once the collar is positioned beyond the open end of the second conduit the liner is retracted so that the deformable collar forms a close fit with the walls of the first conduit surrounding the opening.

21. A method according to claim 19 wherein the liner is positioned along the second conduit and pressure is applied to the inside of the liner in the first conduit to press the same against and adhere the same to the collar portion of the liner in the second conduit.

22. A method according to claim 21 wherein the first conduit liner is inflated with a fluid and includes an outermost resin impregnated layer such that upon applying pressure to the inside of the liner the resinous layer comes into contact with the deformable collar of the liner in the second conduit.

23. A method according to claim 22 wherein the resin is cured whilst the further lining is pressed against the collar portion such that the further lining is adhered to the collar as the resin sets.

24. A method according to claim 23 wherein the second conduit is reopened by boring or cutting through the section of the further liner which is covering the opening of the second conduit.

## Patentansprüche

1. Vorrichtung zur Auskleidung von einer ersten und einer zweiten Leitung, die miteinander verbunden sind, wobei die genannte erste Leitung im Wesentlichen die Form eines senkrechten Abflussrohres (10, 110) hat, in dem entlang menschliches Abwasser transportiert wird, und die genannte zweite Leitung (12, 112) eine Sanitärvorrichtung mit der ersten Leitung verbindet, wobei die genannte zweite Leitung an der Länge der genannten ersten Leitung entlang in sie mündet, wobei die beiden genannten Leitungen entlang ihrer Länge mit einer jeweiligen ersten bzw. zweiten Auskleidung (20, 28; 120, 128) ausgekleidet sind, wobei die Auskleidung für die zweite Leitung wenigstens an dem Ende, das an der Mündung in die erste Leitung liegt, einen verformbaren Ansatzteil (32; 132) mit einem Durchmesser, der größer als der Innendurchmesser der zweiten Leitung ist, aufweist, so dass, wenn der Ansatz in der ersten Leitung positioniert ist, die Auskleidung (20, 120) der ersten Leitung mit ihm in Kontakt ist und er um den Umfang der Öffnung (13; 113) mit der Innenwand der ersten Leitung (10, 110) in Kontakt gehalten wird, indem er von der genannten Auskleidung (20; 120) der ersten Leitung so überlagert wird, dass ein integrierter ausgekleideter Durchgang für den Abwasserstrom aus der Sanitärvorrichtung geschaffen wird, **dadurch gekennzeichnet, dass** die Auskleidung (28, 128) für die zweite Leitung ein im Wesentlichen starres Rohr (30, 130) umfasst, das mit dem verformbaren Ansatzteil (32, 132) verbunden ist, und die Auskleidung (20, 120) für die erste Leitung nachgiebig ist und ein harzgetränktes Material aufweist, das ausgehärtet wird, wenn der Ansatzteil sich in der richtigen Position in Kontakt mit der Auskleidung (20, 120) befindet.

2. Vorrichtung nach Anspruch 1, bei der die Auskleidung der zweiten Leitung durch die zweite Leitung in Richtung auf die erste Leitung eingeführt wird und der Ansatz, wenn er din Mündung erreicht, sich ausdehnt, um einen Umfangsrand um das Ende der Leitung zu bilden.

3. Vorrichtung nach Anspruch 2, bei der der verformbare Teil elastisch bereitgestellt ist, um sich nach außen ausdehnen.

4. Vorrichtung nach Anspruch 3, bei der der Ansatz sich beim Eintritt in die erste Leitung umformt, so dass eine feste Passung zwischen der Auskleidung und der Leitungswandung erreicht werden kann.

5. Vorrichtung nach Anspruch 1, bei der der Ansatzteil einen elastischen Rand bildet, so dass er auf das genannte Leitungsende aufgepresst werden kann, um mit ihm eine Dichtung zu bilden.

6. Vorrichtung nach Anspruch 1, bei der der Ansatz eine um den Auskleidungskörper geformte Muffe ist.

7. Vorrichtung nach Anspruch 6, bei der die Muffe einen sich konisch nach außen erweiternden Endabschnitt hat, der den Ansatzteil bildet, der die Form eines Randes hat.

8. Vorrichtung nach Anspruch 7, bei der der Ansatzteil eine konische Form hat.

9. Vorrichtung nach Anspruch 1, bei der die Auskleidung für die zweite Leitung den Ansatz und eine angeformte Muffe aufweist.

10. Vorrichtung nach Anspruch 1, bei der die Auskleidung für die zweite Leitung eine Muffe aus Polyurethan aufweist.

11. Vorrichtung nach Anspruch 1, bei der die Auskleidung für die zweite Leitung die Form einer Röhre hat, bei der der Ansatz radial von einem Ende von ihr abhängt.

12. Vorrichtung nach Anspruch 1, bei der die Länge der Auskleidung größer ist als die Lunge der zweiten Leitung, in die sie eingesetzt wird.

13. Vorrichtung nach Anspruch 1, bei der die Auskleidung für die zweite Leitung mit einem Dichtungsmittel versehen ist, um den Eingriff zwischen der Auskleidung und der Leitung zu ermöglichen.

14. Vorrichtung nach Anspruch 13, bei der das Dichtungsmittel von dem Ansatzteil beabstandet ist und eine winklige Form hat und zur Anbringung an dem Auskleidungskörper angeordnet ist.

15. Vorrichtung nach Anspruch 14, bei der das Dichtungsmittel eine oder mehrere Rippen oder Keile umfasst, die in einer Längsrichtung an wenigstens einem Teil einer Außenfläche der Auskleidung entlang verlaufen.

16. Vorrichtung nach Anspruch 1, bei der die Dichtungsmittel einen Hohlraum zwischen der Auskleidung und der Leitung definieren.

17. Vorrichtung nach Anspruch 1, bei der die Auskleidungen für die erste und/oder zweite Leitung eine an ihnen entlang imprägnierte Schicht von harzigem, aushärtbarem Material aufweisen und, wenn die genannten Auskleidungen in Solllage sind, das Harz ausgehärtet wird, so dass es erhärtet und die Auskleidungen in Solllage hält.

18. Vorrichtung nach Anspruch 17, bei der eine Zug- und/oder Schubanordnung bereitgestellt ist, um die Auskleidungen in ihren jeweiligen Leitungen entlang in Solllage zu bewegen.

19. Verfahren zur Auskleidung einer ersten und einer zweiten Leitung (10, 12; 110, 112), die miteinander verbunden sind, unter Verwendung einer Vorrichtung nach einem der Ansprüche 1 bis 18, wobei die genannte erste Leitung ein Abflussrohr ist und die zweite Leitung eine Sanitärvorrichtung mit dem Abflussrohr verbindet, wobei die genannte zweite Leitung an einer Stelle in die erste Leitung mündet, die zwischen ihren Enden liegt, wobei das Verfahren die folgenden Schritte aufweist: Einsetzen einer Auskleidung (28; 128) in und entlang der zweiten Leitung, so dass ein Ansatzteil (32;132) der Auskleidung verformt wird, während es in der zweiten Leitung (12; 112) entlang bewegt wird, und sich federnd ausdehnt, wenn es aus der Mündung der zweiten Leitung in die erste Leitung (10; 110) ragt, um an der Wandung der ersten Leitung einen Rand um die Mündung (13; 113) in die erste Leitung zu bilden, Einsetzen einer Auskleidung (20;120) entlang der ersten Leitung, wobei die Auskleidung (20; 120) der ersten Leitung mit der Auskleidung (20; 120) der ersten Leitung in Kontakt kommt und den genannten Ansatzteil (32;132) und die Mündung in die zweite Leitung überlagert, Druck ausgeübt wird, um die Auskleidung und den Ansatzteil der ersten Leitung gegen die Wandung der ersten Leitung zu pressen, wenigstens die Auskleidung der ersten Leitung gehärtet wird, um diese mit dem Ansatzteil in Solllage zu halten, und der Teil der Auskleidung der ersten Leitung, der die Öffnung der zweiten Leitung überlagert, weggeschnitten wird, um die Öffnung freizulegen und einen integrierten ausgekleideten Durchgang für Abwasser aus der Sanitärvorrichtung in die erste Leitung zu bilden.

20. Verfahren nach Anspruch 19, bei dem die Auskleidung, sobald sich der Ansatz jenseits des offenen Endes der zweiten Leitung befindet, zurückgezogen wird, so dass der verformbare Ansatz die Öffnung umgebend eine feste Passung mit der Wandung der ersten Leitung bildet.

21. Verfahren nach Anspruch 19, bei dem sich die Auskleidung entlang der zweiten Leitung befindet und Druck auf die Innenseite der Auskleidung in der ersten Leitung ausgeübt wird, um diese gegen den Ansatzteil der Auskleidung in der zweiten Leitung zu drücken und an ihr anzuhaften.

22. Verfahren nach Anspruch 21, bei der die Auskleidung der ersten Leitung mit einem fluid aufgebläht wird und eine äußerste harzimprägnierte Schicht aufweist, so dass die harzige Schicht beim Ausüben von Druck auf die Innenseite der Auskleidung mit dem verformbaren Ansatz der Auskleidung in der zweiten Leitung in Kontakt kommt.

23. Verfahren nach Anspruch 22, bei dem das Harz ausgehärtet wird, während die weitere Auskleidung gegen den Ansatzteil gedrückt wird, so dass die weitere Auskleidung beim Erstarren des Harzes an dem Ansatz angehaftet wird.

24. Verfahren nach Anspruch 23, bei dem die zweite Leitung durch Durchbohren oder - schneiden des Abschnitts der weiteren Auskleidung, der die Öffnung der zweiten Leitung bedeckt, wieder geöffnet wird.

## Revendications

1. Appareil pour effectuer le revêtement d'un premier et d'un deuxième conduits raccordés l'un à l'autre, ledit premier conduit se présentant sous la forme d'un tuyau descendant (10, 110) sensiblement vertical le long duquel des effluents humains sont acheminés et ledit deuxième conduit (12, 112) assurant le raccordement d'un équipement sanitaire au premier conduit, ledit deuxième conduit s'ouvrant dans ledit premier conduit le long de la longueur de celui-ci, lesdits deux conduits étant garnis d'un premier et d'un deuxième revêtements (20, 28 ; 120, 128) respectifs le long de la longueur de ceux-ci, le revêtement pour le deuxième conduit incluant - au niveau au moins de l'extrémité qui se trouve à l'ouverture donnant dans le premier conduit - une portion collier déformable (32 ; 132) dont le diamètre est plus grand que le diamètre interne du deuxième conduit, de sorte que, lorsque le collier est positionné dans le premier conduit, il entre en contact avec le revêtement (20 ; 120) du premier conduit et est maintenu en contact avec la paroi interne du premier conduit (10, 110) autour de la périphérie de l'ouverture (13 ; 113) du fait qu'il est recouvert par ledit revêtement (20 ; 120) du premier conduit de sorte qu'un passage revêtu intégral est créé pour l'écoulement des effluents en provenance de l'équipement sanitaire, **caractérisé en ce que** le revêtement (28, 128) pour le deuxième conduit comprend un tube (30, 130) sensiblement rigide lequel est raccordé à la portion collier déformable (32, 132) et que le revêtement (20, 120) pour le premier conduit est pliable et inclut une matière imprégnée de résine laquelle est durcie une fois que la portion collier se trouve dans la position correcte en contact avec le revêtement (20, 120).

2. Appareil selon la revendication 1, le revêtement du deuxième conduit étant introduit à travers le deuxième conduit vers le premier conduit et, lorsque le collier atteint l'ouverture, il s'étend afin de constituer une jante circonférentielle autour de l'extrémité du conduit.

3. Appareil selon la revendication 2, la portion collier déformable étant montée de façon élastique afin de s'étendre vers l'extérieur.

4. Appareil selon la revendication 3, le collier se reformant lors de l'introduction dans le premier conduit de sorte qu'il est possible d'obtenir un ajustage serré entre le revêtement et la paroi du conduit.

5. Appareil selon la revendication 1, la portion collier formant une jante pliable pour qu'elle puisse être pressée sur ladite extrémité de conduit de sorte à constituer un joint étanche avec celle-ci.

6. Appareil selon la revendication 1, le collier étant un manchon lequel est formé autour du corps du revêtement.

7. Appareil selon la revendication 6, le manchon ayant une portion d'extrémité évasée vers l'extérieur laquelle constitue la portion collier qui adopte la forme d'une jante.

8. Appareil selon la revendication 7, la portion collier ayant une forme conique.

9. Appareil selon la revendication 1, le revêtement pour le deuxième conduit englobant le collier et un manchon qui en fait partie intégrante.

10. Appareil selon la revendication 1, le revêtement pour le deuxième conduit incluant un manchon fabriqué en polyuréthanne.

11. Appareil selon la revendication 1, le revêtement pour le deuxième conduit se présentant sous la forme d'un tube alors que le collier en dépend radialement à partir d'une extrémité de celui-ci.

12. Appareil selon la revendication 1, la longueur du revêtement dépassant la longueur du deuxième conduit dans lequel elle est introduite.

13. Appareil selon la revendication 1, le revêtement pour le deuxième conduit étant pourvu d'un moyen de scellement pour permettre l'engagement entre le revêtement et le conduit.

14. Appareil selon la revendication 13, le moyen de scellement étant espacé de la portion collier et ayant une forme angulaire et étant agencé en vue d'une fixation au corps du revêtement.

15. Appareil selon la revendication 14, le moyen de scellement comportant une ou plusieurs nervures ou cannelures qui s'étendent suivant un sens longitudinal le long d'une partie au moins d'une surface externe du revêtement.

16. Appareil selon la revendication 1, le moyen de scellement définissant une cavité entre le revêtement et le conduit.

17. Appareil selon la revendication 1, les revêtements pour le premier et/ou le deuxième conduits comportant une couche de matière résineuse, durcissable, laquelle est imprégnée sur toute sa longueur et, lorsque lesdits revêtements se trouvent en position, la résine est activée pour se durcir et maintenir les revêtements en position.

18. Appareil selon la revendication 17, un ensemble à poussée et/ou traction étant prévu pour permettre aux revêtements d'être déplacés jusqu'à leur position dans leurs conduits respectifs.

19. Procédé pour effectuer le revêtement d'un premier et d'un deuxième conduits (10, 12 ; 110, 112) raccordés l'un à l'autre, grâce à l'utilisation d'un appareil tel qu'il est défini dans l'une quelconque des revendications 1 à 18, ledit premier conduit étant un tuyau descendant et le deuxième conduit assurant le raccordement d'un équipement sanitaire au tuyau descendant, ledit deuxième conduit s'ouvrant dans le premier conduit au niveau d'un emplacement intermédiaire entre les extrémités de celui-ci, le procédé englobant les étapes consistant à introduire un revêtement (28 ; 128) dans le deuxième conduit et le long de ce dernier de sorte qu'une portion collier (32 ; 132) du revêtement est déformée au fur et à mesure qu'elle passe le long du deuxième conduit (12 ; 112) et s'étend de façon élastique lorsqu'elle fait saillie à partir de l'ouverture du deuxième conduit dans le premier conduit (10 ; 110) afin de former une jante sur la paroi du premier conduit autour de l'ouverture (13 ; 113) jusque dans le premier conduit, à insérer un revêtement (20 ; 120) le long du premier conduit cas dans lequel le revêtement (20 ; 120) du premier conduit entre en contact avec le revêtement (20 ; 120) du premier conduit et recouvre ladite portion collier (32 ; 132) et l'ouverture donnant dans le deuxième conduit, une pression étant appliquée afin de presser le revêtement du premier conduit et la portion collier contre la paroi du premier conduit, au moins le revêtement du premier conduit étant durci pour retenir celui-ci en position avec la portion collier et la portion du revêtement du premier conduit recouvrant l'ouverture du deuxième conduit étant enlevée par découpage afin de révéler l'ouverture et former un passage revêtu intégral pour les effluents en provenance de l'équipement sanitaire jusque dans le premier conduit.

20. Procédé selon la revendication 19, une fois le collier positionné au-delà de l'extrémité ouverte du deuxième conduit, le revêtement est rétracté de sorte que le collier déformable constitue un ajustage serré avec les parois du premier conduit entourant l'ouverture.

21. Procédé selon la revendication 19, le revêtement étant positionné le long du deuxième conduit et une certaine pression étant appliquée sur la face interne du revêtement dans le premier conduit afin de le presser contre la portion collier du revêtement, et de le faire adhérer à cette portion collier, dans le deuxième conduit.

22. Procédé selon la revendication 21, le revêtement du premier conduit étant gonflé à l'aide d'un fluide et incluant une couche imprégnée de résine située à l'extérieur de sorte que, lors de l'application d'une pression sur la face interne du revêtement, la couche résineuse se mettra en contact avec le collier déformable du revêtement dans le deuxième conduit.

23. Procédé selon la revendication 22, la résine subissant un durcissement pendant que le revêtement supplémentaire est pressé contre la portion collier de sorte que le revêtement supplémentaire vient adhérer au collier au fur et à mesure que la résine durcit.

24. Procède selon la revendication 23, le deuxième conduit étant rouvert suite à une opération de perçage ou de découpage à travers la section du revêtement supplémentaire qui couvre l'ouverture du deuxième conduit.
